# FASCICULE DE BREVET EUROPEEN

(11) **EP 4 273 391 B1**
(45) Date de publication et mention de la délivrance du brevet: **21.01.2026**
(21) Numéro de dépôt: 23171029.4
(22) Date de dépôt: 02.05.2023
(51) Int. Cl.: F02C 7/36, F02C 7/06, F02C 7/20, F01D 5/02, F01D 25/16, F04D 29/60

(54) **PROCÉDÉ DE PRÉ-ASSEMBLAGE POUR UNE TURBOMACHINE D'AÉRONEF**
VORMONTAGEVERFAHREN FÜR EINE FLUGZEUGTURBOMASCHINE
PRE-ASSEMBLY METHOD FOR AN AIRCRAFT TURBINE ENGINE

(30) Priorité: 04.05.2022 FR 2204242
(43) Date de publication de la demande: 08.11.2023
(73) Titulaire: Safran Transmission Systems, 92700 Colombes (FR)
(72) Inventeur: SIMON, Adrien Louis, 77550 MOISSY-CRAMAYEL (FR); BECK, Guillaume Julien, 77550 MOISSY-CRAMAYEL (FR); DOUY, Yohan, 77550 MOISSY-CRAMAYEL (FR); PELTIER, Jordane Emile André, 77550 MOISSY-CRAMAYEL (FR); SEBAN, Jérémy David, 77550 MOISSY-CRAMAYEL (FR)
(74) Mandataire: Cabinet Beau de Loménie

(56) Documents cités:
- EP-A2- 2 584 153
- WO-A1-2021/058888
- US-A1- 2009 081 039
- US-A1- 2020 095 890

## Description

### Domaine technique

Le présent exposé concerne le domaine des turbomachines d'aéronef, tels que les avions ou hélicoptères, et vise plus particulièrement un perfectionnement du procédé de montage de telles turbomachines. A cette fin, le présent exposé concerne un procédé de pré-assemblage pour une turbomachine d'aéronef.

### Technique antérieure

Les turbomachines d'aéronef sont des dispositifs complexes comprenant de nombreux composants qui sont assemblés les uns aux autres, généralement en commençant par les composants les plus à l'intérieur de la turbomachine et en allant progressivement vers les composants les plus à l'extérieur de la turbomachine. Le montage de chaque composant nécessite que des accès soient prévus pour insérer le composant dans la turbomachine et le fixer aux composants précédemment montés.

Or, ces accès ne servent généralement qu'au montage et au démontage : ils forment donc une contrainte de conception dont il serait avantageux de pouvoir s'affranchir. De plus, certaines brides, par lesquelles les couples des composants passent temporairement lors du montage, doivent être surdimensionnées alors qu'elles ne jouent qu'un faible rôle dans l'assemblage final. Enfin, l'assemblage des composants successifs via des espaces réduits exige des précautions particulières pour ne pas endommager les autres composants de la turbomachine, et peut conduire à des niveaux de serrage, frettage, etc. inférieurs à ce qui serait souhaité.

US 2020/095890 et US 2009/081039 décrivent des turbomachines d'aéronef munies d'un réducteur, US 2009/081039 prévoyant de plus une architecture modulaire.

### Exposé de l'invention

Le présent exposé vise à remédier au moins en partie à ces inconvénients.

A cet effet, le présent exposé concerne un procédé de pré-assemblage pour une turbomachine d'aéronef, comprenant un assemblage préalable, hors de la turbomachine, des composants suivants les uns avec les autres :
- un réducteur configuré pour transmettre une rotation entre au moins deux rotors de la turbomachine tout en modifiant le rapport de vitesse et de couple de l'un à l'autre desdits au moins deux rotors,
- un arbre cinématiquement couplé au réducteur et configuré pour être cinématiquement couplé à l'un desdits au moins deux rotors,
- un support de palier, et
- au moins un palier monté sur le support de palier et configuré pour soutenir l'arbre en rotation.

Par la suite, et sauf indication contraire, par « un » ou « l' » élément (par exemple rotor, palier, etc.), on entend « au moins un » ou « l'au moins un » ou encore « chaque » élément. Réciproquement, l'emploi générique du pluriel peut inclure le singulier.

Un réducteur est un composant ayant au moins une entrée et une sortie, et permettant de modifier la vitesse de rotation et/ou le couple entre l'au moins une entrée et l'au moins une sortie. Ainsi, le rapport vitesse/couple de l'entrée peut différer du rapport vitesse/couple de la sortie. Dans les turbomachines utilisées pour la propulsion des aéronefs, par exemple des turbomachines à double flux, le réducteur peut avoir pour but d'obtenir une vitesse de rotation relativement lente pour entraîner le propulseur (un premier rotor) à partir d'une vitesse de rotation relativement rapide de la turbine (un deuxième rotor).

Par exemple, le réducteur peut comprendre un pignon central, appelé solaire, une couronne, extérieure au solaire, et un ou plusieurs pignons appelés satellites qui sont en prise avec le solaire et la couronne. L'engrènement des différents organes peut être mécanique ou magnétique, par exemple. Les satellites peuvent être soutenus par un châssis appelé porte-satellite.

L'arbre est cinématiquement couplé au réducteur et configuré pour être cinématiquement couplé à l'un des rotors. Ainsi, l'arbre participe à la liaison cinématique et à la transmission de puissance entre le réducteur et ledit rotor. En d'autres termes, l'arbre peut être entraîné par le réducteur et configuré pour entraîner à son tour l'un des rotors, ou bien l'arbre peut être configuré pour être entraîné par l'un des rotors et entraîner à son tour le réducteur. Par la suite, l'arbre sera aussi désigné comme « premier arbre ».

Au sens du présent exposé et sauf indication contraire, la mention d'un « premier » élément, tel qu'un premier arbre ou un premier rotor, n'implique pas nécessairement l'existence d'un « deuxième » élément ni, le cas échéant, de relation d'ordre entre le premier et le deuxième élément. Les qualificatifs ordinaux sont, dans ce contexte, employés à des seules fins de clarté et d'identification, sans préjuger de caractéristiques particulières. De même, et réciproquement, la mention d'un élément de rang plus élevé (troisième, etc.) n'implique nullement que des éléments de rang moins élevés, tel qu'un éventuel deuxième élément, existent et/ou comprennent les caractéristiques qui auront pu être présentées par ailleurs.

Le support de palier est un support, fixe ou mobile dans le référentiel de la turbomachine, qui est prévu pour supporter un ou plusieurs paliers, en l'occurrence le ou les paliers qui soutiennent en rotation l'arbre mentionné précédemment. Ainsi, l'arbre est rotatif dans un référentiel lié au support de palier.

Le palier est un composant permettant de soutenir l'arbre par rapport au support de palier, tout en garantissant à l'arbre une liberté de mouvement, en l'espèce en rotation, par rapport au support de palier.

L'assemblage préalable, aussi appelé pré-assemblage, désigne le fait de procéder à un assemblage des composants listés ci-dessus préalablement à leur assemblage avec le reste de la turbomachine. En d'autres termes, au lieu d'introduire le réducteur, l'arbre, le support de palier et le palier un à un dans la turbomachine, en assemblant chacun de ces composants à des composants précédemment installés, ces composants sont d'abord assemblés entre eux, hors de la turbomachine, afin qu'ils forment un module. Ce module, d'un seul tenant, peut être introduit dans la turbomachine en une fois, et ainsi fixé à la turbomachine.

Grâce au fait que les composants sont assemblés hors de la turbomachine, le montage est facilité et les risques d'endommagement de la turbomachine amoindris. En outre, l'assemblage des composants étant plus simple à maîtriser hors de la turbomachine, les problèmes de chaînes de côtes, désalignement et couples galvaniques sont réduits, de même que les contraintes de conception liées à l'assemblage.

Il s'ensuit des gains de masse - pièces de fixation moins complexes et non surdimensionnées -, de fiabilité -montage du module mieux maîtrisé et moins de brides et de pièces de fixation -, de rendement - le montage est plus rapide - et de modularité - le montage et le démontage sont facilités.

Dans certains modes de réalisation, le procédé comprend le frettage de l'au moins un palier sur l'arbre et/ou sur le support de palier. Au sens du présent exposé, le frettage désigne l'assemblage d'une première pièce autour d'une deuxième pièce, la première pièce étant normalement trop petite pour accueillir la deuxième. Il s'ensuit des efforts transversaux à l'interface entre les deux pièces, et donc une friction importante qui maintient les deux pièces l'une par rapport à l'autre. Cela évite que le palier ne glisse par rapport à l'arbre et/ou au support de palier. L'interface où le frettage est réalisé est parfois appelée portée de frettage. Le frettage peut être réalisé avec tout ou partie du palier concerné.

Le frettage du palier sur l'arbre et/ou sur le support de palier lui assure un bon maintien malgré les couples importants auxquels le palier est soumis. Le fait de procéder à un frettage hors de la turbomachine permet de fretter le palier avec des niveaux d'efforts supérieurs, et donc un meilleur maintien, que ce qui serait faisable si le frettage était réalisé avec au moins l'un des composants déjà monté sur la turbomachine.

Dans certains modes de réalisation, le support de palier comprend un élément d'assemblage à un carter de la turbomachine. Ainsi, le module obtenu par le procédé de pré-assemblage peut être fixé à un carter de la turbomachine via le support de palier. En d'autres termes, dans la turbomachine complète, le support de palier est assemblé directement au carter de la turbomachine.

Dans certains modes de réalisation, le réducteur comprend un organe statorique et les composants comprennent en outre un élément d'attache s'étendant de l'organe statorique au support de palier de façon à fixer l'organe statorique au support de palier. L'organe statorique peut être l'un des organes du réducteur tel que la couronne ou le porte-satellite. Le fait que l'organe statorique soit fixé par l'élément d'attache au support de palier rend cet organe fixe dans le référentiel de la turbomachine. De ce fait, le réducteur n'est pas un réducteur différentiel, mais peut être un réducteur planétaire, dans lequel le porte-satellite est fixe, ou un réducteur épicycloïdal, dans lequel la couronne est fixe.

Grâce au fait qu'un élément d'attache s'étend de l'organe statorique au support de palier de façon à fixer l'organe statorique au support de palier, le réducteur lui-même est fixé doublement par rapport au support de palier, et non plus seulement via l'arbre et le palier, ce qui facilite la manipulation du module en tant qu'assemblage d'un seul tenant. En outre, il n'est pas nécessaire de fixer l'organe statorique directement sur le carter ou sur une autre partie fixe de la turbomachine, puisqu'il sera fixé indirectement au carter, via le support de palier. Le montage final du module dans la turbomachine est donc facilité.

Dans certains modes de réalisation, l'élément d'attache s'étend d'un côté du réducteur à un autre côté du réducteur. Par exemple, l'élément d'attache peut s'étendre entre l'avant et l'arrière du réducteur, l'avant et l'arrière étant définis le long d'une direction axiale.

On appelle axe du module, l'axe de rotation des parties tournantes du module, notamment du réducteur et/ou de l'arbre. La direction axiale correspond à la direction de l'axe du module et une direction radiale est une direction perpendiculaire à cet axe et coupant cet axe. De même, un plan axial est un plan contenant l'axe du module et un plan radial est un plan perpendiculaire à cet axe. Une circonférence s'entend comme un cercle appartenant à un plan radial et dont le centre appartient à l'axe du module. Une direction tangentielle ou circonférentielle est une direction tangente à une circonférence ; elle est perpendiculaire à l'axe du module mais ne passe pas par l'axe.

Dans ce mode de réalisation, l'élément d'attache contourne le réducteur. La longueur nécessaire à ce contournement assure à l'élément d'attache une certaine souplesse, qui permet d'accommoder les efforts appliqués au réducteur, notamment dans une direction axiale.

Dans certains modes de réalisation, les composants comprennent en outre un deuxième arbre cinématiquement couplé au réducteur. Le deuxième arbre peut entraîner, ou être entraîné par, un organe du réducteur différent de l'organe couplé au premier arbre. Par exemple, le premier arbre peut former une sortie du réducteur, tandis que le deuxième arbre forme une entrée du réducteur, ou vice versa. En fonctionnement, la vitesse de rotation du premier arbre peut être différente de la vitesse de rotation du deuxième arbre. Par ailleurs, optionnellement, le premier arbre et le deuxième arbre peuvent être prévus de part et d'autre du réducteur, c'est-à-dire à des côtés opposés du réducteur.

Dans certains modes de réalisation, l'arbre présente une butée pour le positionnement axial du rotor correspondant, la butée étant située telle que le rotor soit maintenu à distance de l'au moins un palier. Le rotor correspondant est le rotor qui cinématiquement couplé au dit arbre. Grâce au fait que le rotor est maintenu à distance du palier, le fonctionnement du palier n'est pas affecté.

Dans certains modes de réalisation, l'au moins un palier est choisi parmi un palier à billes, un palier à rouleaux ou un palier à rouleaux coniques. Par exemple, les paliers à rouleaux coniques supportent une charge accrue et peuvent permettre une meilleure compacité.

Dans certains modes de réalisation, le rotor cinématiquement couplé à l'arbre est une soufflante ou une hélice de la turbomachine, ou plus généralement un propulseur de la turbomachine. Dans ces modes de réalisation, l'arbre (premier arbre) est donc un arbre de soufflante ou d'hélice, configuré pour tourner à des vitesses relativement lentes avec un couple élevé. Par ailleurs, le deuxième rotor, par exemple une turbine ou un compresseur, peut être cinématiquement couplé à un autre organe du réducteur, éventuellement via un arbre *ad hoc* (par exemple le deuxième arbre précité).

Dans certains modes de réalisation, au moins certains des composants présentent des éléments de fixation à des pièces de la turbomachine distinctes desdits composants, les éléments de fixation étant tous prévus d'un même côté du module. On rappelle que le module désigne l'entité qui est obtenue par le procédé de pré-assemblage. On comprend que les pièces de la turbomachine, auxquelles se fixent les éléments de fixation, sont distinctes des composants du module ; en d'autres termes, les éléments de fixation ne sont pas des éléments de fixation internes au module, mais avec des pièces externes au module. Grâce à ces dispositions, le module peut être assemblé à la turbomachine plus simplement, car toutes les fixations sont à opérer d'un même côté. De préférence, ce côté, dit accessible, est le côté opposé au côté, dit non-accessible, qui est inséré le premier dans la turbomachine.

Dans certains modes de réalisation, les composants sont préassemblés de façon à être démontables les uns des autres. Ainsi, lors d'une opération de maintenance, certains composants peuvent être changés et d'autres conservés. Du fait que le module forme un assemblage d'un seul tenant, il peut être sorti de la turbomachine d'un seul tenant, réparé ou modifié hors de la turbomachine, puis réinséré dans la turbomachine à nouveau d'un seul tenant.

Le présent exposé concerne également un procédé d'assemblage d'une turbomachine d'aéronef, comprenant l'obtention d'une première partie de turbomachine comprenant un rotor, le montage d'un module obtenu par le procédé tel que décrit précédemment sur la première partie, et l'assemblage d'une deuxième partie comprenant un rotor à l'arbre du module. Ensemble, la première partie, le module et la deuxième partie peuvent former la turbomachine. Le module permet le couplage cinématique entre la première partie et la deuxième partie, via l'arbre qui est couplé à la deuxième partie et le réducteur qui est couplé à la première partie, ou vice versa.

Le présent exposé concerne également un module pour turbomachine d'aéronef, comprenant les composants suivants assemblés les uns avec les autres :
- un réducteur configuré pour transmettre une rotation entre au moins deux rotors de la turbomachine tout en modifiant le rapport de vitesse et de couple de l'un à l'autre desdits au moins deux rotors,
- un arbre cinématiquement couplé au réducteur et configuré pour être cinématiquement couplé à l'un desdits au moins deux rotors,
- un support de palier, et
- au moins un palier monté sur le support de palier et configuré pour soutenir l'arbre en rotation.

Ce module peut être réalisé par le procédé de pré-assemblage tel que décrit précédemment. Ainsi, le module peut avoir tout ou partie des caractéristiques détaillées précédemment.

Dans certains modes de réalisation, le module comprend en outre des premiers éléments de fixation configurés pour fixer l'arbre à un premier desdits rotors, les premiers éléments de fixation étant optionnellement prévus à une extrémité de l'arbre opposée au réducteur, des deuxièmes éléments de fixation configurés pour fixer le réducteur au deuxième desdits rotors, et des troisièmes éléments de fixation configurés pour fixer le support de palier à un carter de la turbomachine.

### Brève description des dessins

D'autres caractéristiques et avantages de l'objet du présent exposé ressortiront de la description suivante de modes de réalisation, donnés à titre d'exemples non limitatifs, en référence aux figures annexées.
[Fig. 1] La figure 1 est une vue en demi-coupe longitudinale simplifiée d'une turbomachine selon un mode de réalisation.
[Fig. 2] La figure 2 représente schématiquement un module selon un mode de réalisation, en demi-coupe longitudinale.
[Fig. 3] La figure 3 illustre schématiquement des étapes d'un procédé d'assemblage d'une turbomachine selon un mode de réalisation.
[Fig. 4] La figure 4 illustre une première variante de la zone Z de la figure 3.
[Fig. 5] La figure 5 illustre une deuxième variante de la zone Z de la figure 3.

### Description détaillée

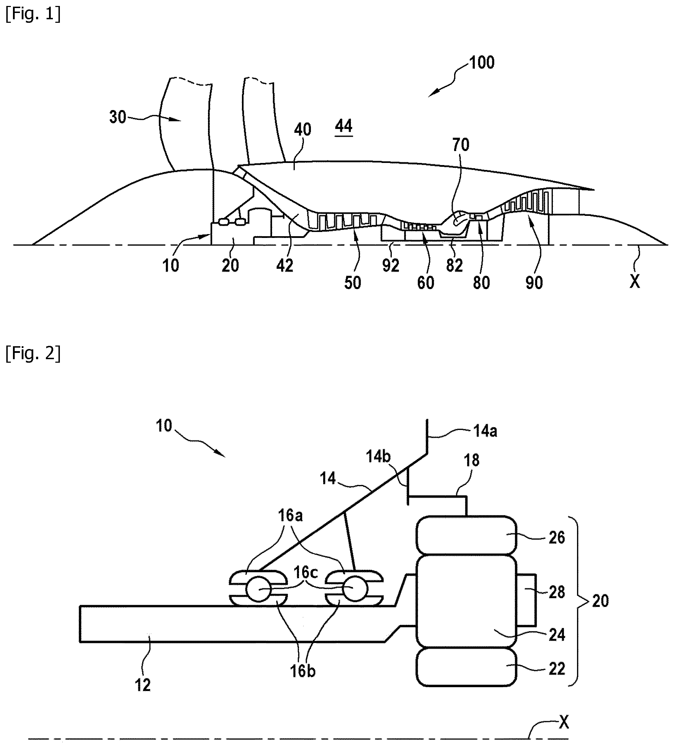

Une turbomachine 100 pour aéronef selon un mode de réalisation est représentée schématiquement sur la figure 1, en demi-coupe longitudinale partielle selon l'axe X. En l'occurrence, la turbomachine 100 est un turboréacteur à double corps et double flux. En effet, la turbomachine 100 comprend un propulseur 30, en l'occurrence une soufflante, de préférence unique, un carter 40 disposé en aval du propulseur 30 et délimitant une veine primaire 42 et une veine secondaire 44. Un compresseur basse pression (compresseur BP) 50, un compresseur haute pression (compresseur HP) 60, une chambre de combustion 70, une turbine haute pression (turbine HP) 80 et une turbine basse pression (turbine BP) 90 sont agencés dans la veine primaire 42, de l'amont vers l'aval. Du fait que la turbomachine 10 est à double corps, elle comporte deux ensembles tournants cinématiquement indépendants, à savoir d'une part un corps haute pression (corps HP), comprenant le compresseur HP 60 et la turbine HP 80, et d'autre part un corps basse pression (corps BP) comprenant le compresseur BP 50 et la turbine BP 90. Chaque compresseur 50, 60 est entraîné directement ou indirectement par la turbine 80, 90 du corps correspondant, les turbines 80, 90 étant mises en mouvement par les gaz de combustion issus de la chambre de combustion 70.

Toutefois, le présent exposé est transposable au cas d'une turbomachine à simple corps. L'unique corps aurait la fonction du corps HP pour le fonctionnement de la turbomachine, mais son rôle par rapport au réducteur décrit ci-après serait celui du corps BP. Par ailleurs, le présent exposé est transposable au cas où le propulseur 30 n'est pas une soufflante, mais une hélice.

Le carter 40 est fixe dans le référentiel de la turbomachine et a fortiori de l'aéronef, et les parties tournantes, à savoir les roues aubagées mobiles du propulseur 30, des compresseurs 50, 60 et des turbines 80, 90, tournent par rapport au carter 40.

La rotation de la turbine HP 80 entraîne le compresseur HP 60 via un arbre HP 82. Le compresseur HP 60 et la turbine HP 80 sont donc cinématiquement dépendants l'un de l'autre et, en particulier ici, tournent à la même vitesse. L'arbre HP 82 peut être soutenu par rapport au carter par au moins un palier, par exemple un premier palier, typiquement un roulement à billes, et un deuxième palier, typiquement un palier à rouleaux.

Par ailleurs, dans ce mode de réalisation, la turbine BP 90 entraîne en rotation le compresseur BP 50. La turbine BP 90 entraîne également en rotation le propulseur 30. Plus précisément, la turbomachine 100 comprend une transmission, ici un réducteur 20, couplée à la turbine BP 90 via un arbre de turbine BP 92. Dans ce mode de réalisation, l'arbre de turbine BP 92 est agencé coaxialement à l'intérieur de l'arbre HP 82. Des paliers peuvent être prévus pour soutenir l'arbre de turbine BP 92.

Dans ce mode de réalisation, l'arbre de turbine BP 92 entraîne directement le compresseur BP 50, mais en variante, le compresseur BP 50 pourrait être entraîné par le réducteur 20.

Par ailleurs, comme schématisé sur la figure 1, le réducteur 20 est couplé en outre au propulseur 30 afin de modifier le rapport de transmission de vitesse de rotation entre la turbine BP 90 et le propulseur 30. En d'autres termes, le réducteur 20 est configuré pour transmettre une rotation entre au moins deux rotors de la turbomachine 100, en l'occurrence la turbine BP 90 et le propulseur 30, tout en modifiant le rapport de vitesse et de couple de l'un à l'autre desdits au moins deux rotors.

Ce faisant, le propulseur 30 peut être entraîné à des vitesses relativement faibles, ce qui permet d'augmenter son diamètre sans dépasser des vitesses critiques en tête de pale. Les turbomachines pourvues d'un réducteur peuvent donc avoir des taux de dilution importants, par exemple supérieurs ou égaux à 10, voire 12 ou encore 14.

La figure 2 illustre plus en détail un module 10 utilisé dans le cadre de la turbomachine 100 afin de faciliter son montage. Comme indiqué précédemment, le module 10 comprend les composants suivants assemblés les uns avec les autres : le réducteur 20 décrit précédemment, un arbre 12, un support de palier 14 et au moins un palier 16, en l'occurrence deux paliers 16.

L'arbre 12 est cinématiquement couplé au réducteur 20 et configuré pour être cinématiquement couplé à un rotor de la turbomachine 100, en l'occurrence au propulseur 30. Plus généralement, l'arbre 12 peut être un arbre de sortie du réducteur 20, et pourrait être cinématiquement couplé, alternativement, au compresseur BP 50.

Comme il ressort de la figure 2, le palier 16 est monté sur le support de palier 14 et est configuré pour soutenir l'arbre 12 en rotation. En l'espèce, comme on le verra par la suite, le support de palier 14 est destiné à être fixe dans le référentiel de la turbomachine. Ainsi, le support de palier 14 peut comprendre un élément d'assemblage à un carter de la turbomachine 100, typiquement le carter 40. Par exemple, le support de palier 14 peut comprendre une bride 14a prévue à cet effet, la bride 14a étant en l'espèce une bride, annulaire ou non, située radialement à l'extérieur du support de palier 14. La bride 14a peut faire saillie radialement vers l'extérieur du support de palier 14. D'autres brides peuvent être prévues selon les besoins, notamment une bride 14b. La bride 14b peut être annulaire ou non. La bride 14b peut faire saillie radialement vers l'intérieur du support de palier 14. Plus généralement, le support de palier 14 peut être monté autour de l'arbre 12.

Le ou les paliers 16 peuvent être choisis parmi des paliers à billes, des paliers à rouleaux ou des paliers à rouleaux coniques. Il est bien entendu possible, en cas de présence de plusieurs paliers, de panacher les types de paliers. Ces paliers 16 comprennent usuellement chacun une bague extérieure 16a, une bague intérieure 16b et un ou plusieurs éléments roulants 16c permettant la rotation de la bague extérieure 16a par rapport à la bague intérieure 16b. Ces éléments roulants 16c peuvent être des billes, des rouleaux ou des rouleaux coniques, de façon non limitative.

Par ailleurs, le réducteur 20 comprend, dans ce mode de réalisation, un solaire 22, un ou plusieurs satellites 24, ainsi qu'une couronne 26. Chaque satellite 24 est en prise avec le solaire 22 et la couronne 26, par exemple par contact (dentures droites, hélicoïdales ou en chevron, typiquement), friction ou champ magnétique. Les satellites 24 peuvent être équirépartis autour du solaire 22.

Par ailleurs, les satellites 24 sont portés par un porte-satellite 28, plus précisément montés rotatifs sur le porte-satellite 28. Le porte-satellite 28 peut être de tout type convenant à l'application envisagée, par exemple de type cage avec porte-cage ou de type monobloc.

Dans ce mode de réalisation, le satellite 24 est représenté comme satellite à un seul étage. Toutefois, si l'on désire un réducteur ayant plusieurs sorties ou plusieurs entrées dont les rapports de vitesse et de couple diffèrent, il est possible de prévoir que le satellite ait plusieurs étages, chaque étage étant en prise avec une entrée/sortie différente, par exemple une couronne différente ou un solaire différent. Le cas échéant, la présente description peut s'appliquer à une ou plusieurs des couronnes/solaires.

Dans ce mode de réalisation, le réducteur 20 est un réducteur épicycloïdal, au sens où la couronne 26 est prévue pour être fixe dans le référentiel de la turbomachine 100. En d'autres termes, la couronne 26 forme un organe statorique du réducteur 20. Alors, un élément d'attache 18 peut être prévu afin de fixer cet organe statorique, à savoir la couronne 26, au support de palier 14. En l'espèce, l'élément d'attache 18 s'étend depuis la couronne 26 jusqu'au support de palier 14, par exemple jusqu'à la bride 14b décrite précédemment. Ainsi, la couronne 26 peut être fixée déjà au sein du module 10. La fixation de l'élément d'attache 18 d'une part à la couronne 26, d'autre part au support de palier 14, peut être réalisée par des moyens connus en soi par l'homme du métier.

L'élément d'attache 18 est fixé directement au support de palier 14, et directement à la couronne 26.

Comme indiqué précédemment, le module 10 fait l'objet d'un assemblage préalable, hors de la turbomachine, de ses différents composants les uns avec les autres.

Par exemple, le procédé de pré-assemblage du module 10 peut comprendre l'assemblage du porte-satellite 28 avec l'arbre 12. Les différents organes du réducteur 20 peuvent être montés les uns avec les autres avant ou après cette étape.

Par ailleurs, le procédé de pré-assemblage du module 10 peut comprendre le montage des paliers 16 sur l'arbre 12. En l'espèce, le procédé de pré-assemblage comprend plus précisément le montage des bagues intérieures 16b des paliers 16 sur l'arbre 12. Ce montage peut être réalisé par frettage. Le frettage peut être facilité par le fait de chauffer ou refroidir certaines pièces afin de les dilater ou contracter. Le frettage peut également nécessiter d'appliquer des efforts importants. Ces opérations sont facilitées par le fait que le frettage ait lieu en dehors de la turbomachine, notamment sur un outillage dédié permettant de réduire le risque d'endommagement du reste de la turbomachine au cours de l'assemblage.

Par ailleurs, le procédé de pré-assemblage du module 10 peut comprendre le montage des paliers 16 dans le support de palier 14. En l'espèce, le procédé de pré-assemblage comprend plus précisément le montage des bagues extérieures 16a des paliers 16 dans le support de palier 14. Selon un exemple, les bagues extérieures 16a peuvent être frettées dans le support de palier 14. Les explications relatives au frettage des paliers 16 sur l'arbre 12 s'appliquent mutatis mutandis.

Par ailleurs, le cas échéant, le procédé de pré-assemblage du module 10 peut comprendre la fixation de l'élément d'attache 18 sur l'organe statorique, ici la couronne 26, et sur le support de palier 14.

Ces étapes peuvent être réalisées dans tout ordre convenable pour l'homme du métier, étant entendu que, grâce au fait que le module 10 est préassemblé hors de la turbomachine, l'accès aux différents composants et à leurs fixations respectives est facilité. En outre, lesdites fixations peuvent être prévues démontables pour faciliter la maintenance du module 10.

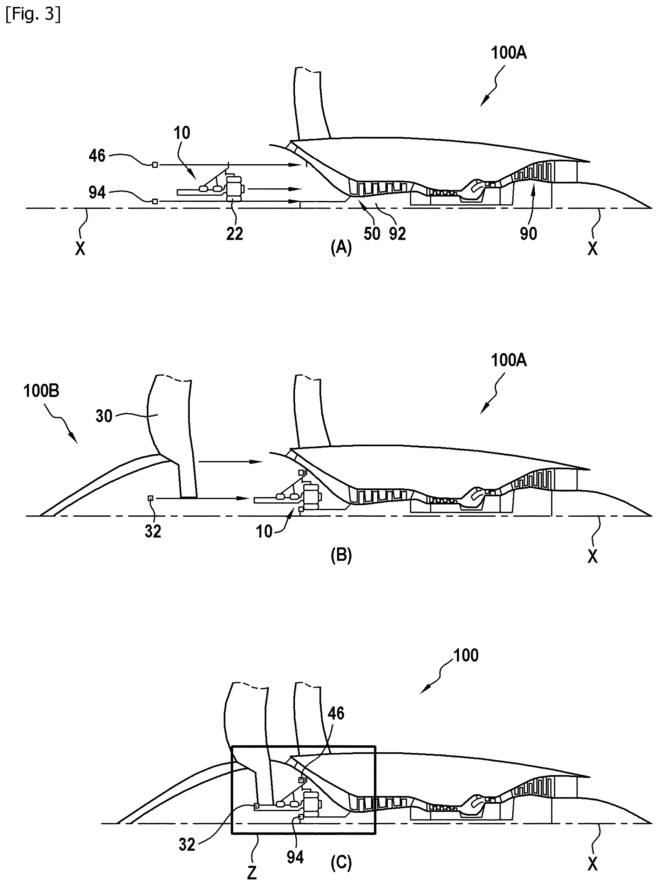

Ainsi, le module 10 obtenu peut être ensuite assemblé d'un seul tenant au reste de la turbomachine 100, comme il va maintenant être décrit en référence à la figure 3.

La figure 3 illustre des étapes d'un procédé d'assemblage d'une turbomachine d'aéronef telle que la turbomachine 100 décrite précédemment. Le procédé d'assemblage comprend l'obtention d'une première partie 100A de turbomachine. En l'espèce, comme illustré sur la figure 3(A), la première partie 100A comprend l'essentiel de la turbomachine, en particulier les corps haute et basse pression définis précédemment. Toutefois, dans d'autres modes de réalisation, la première partie 100A pourrait être plus limitée et comprendre moins de composants que ceux illustrés sur la figure 3(A). En tout état de cause, la première partie 100A peut comprendre un rotor, par exemple la turbine BP 90 ou tout élément rotatif qui lui est lié, par exemple l'arbre de turbine BP 92. La première partie 100A peut former un ensemble d'un seul tenant.

Le procédé d'assemblage comprend également le montage du module 10 obtenu préalablement sur la première partie 100A, comme l'illustrent les flèches de la figure 3(A). Comme évoqué précédemment, le module 10 peut être monté d'un seul tenant sur la première partie 100A.

Le montage peut comprendre la fixation du module 10 sur la première partie 100A. En l'espèce, le support de palier 14 est assemblé au carter 40, par exemple via la bride 14a, par des éléments de fixation 46 appropriés. Par exemple, les éléments de fixation 46, ou troisièmes éléments de fixation, peuvent comprendre des cannelures assorties d'écrous, des vis, des boulons, etc. Les éléments de fixation 46 peuvent être disposés autour du réducteur 20, par exemple radialement à l'extérieur du réducteur 20 et axialement en vis-à-vis du réducteur 20.

Par ailleurs, le réducteur 20 peut être assemblé au rotor précité. En l'espèce, le solaire 22 est fixé à l'arbre de turbine BP 92, de sorte que le solaire 22 soit cinématiquement couplé à la turbine BP 90. Des éléments de fixation 94 appropriés peuvent être employés à cette fin. Par exemple, les éléments de fixation 94, ou deuxièmes éléments de fixation, peuvent comprendre une cannelure.

Tout ou partie des éléments de fixation 32, 46, 94 du module 10 sur le reste de la turbomachine peuvent être démontables.

Les éléments de fixation 32, ou premiers éléments de fixation, fixent l'arbre 12 à un premier desdits rotors, en l'occurrence le propulseur 30. Les premiers éléments de fixation 32 peuvent être prévus à une extrémité de l'arbre 12 opposée au réducteur 20, par exemple pour serrer axialement vers l'aval le propulseur 30 contre l'arbre 12.

A l'issue de ce montage, le module 10 et la première partie 100A sont assemblés, comme illustré sur la figure 3(B). La figure 3(B) illustre également que le procédé comprend ensuite l'assemblage d'une deuxième partie 100B au module 20. Plus précisément, la deuxième partie 100B comprend un rotor, en l'espèce le propulseur 30, qui est assemblé à l'arbre 12 du module 20. Ainsi, le propulseur 30 peut être cinématiquement couplé à l'arbre 12, donc au porte-satellite 28. Des éléments de fixation 32 appropriés peuvent être employés à cette fin. Par exemple, les éléments de fixation 32 peuvent comprendre un écrou.

Il résulte de ce procédé la turbomachine 100 illustrée sur la figure 3(C).

Comme il ressort de la figure 3, les éléments de fixation 32, 46, 94 sont tous prévus d'un même côté du module 20, à savoir le côté avant (à gauche sur la figure 3). Ainsi, pour la fixation des composants du module 20 aux pièces de la turbomachine distinctes de ces composants, l'accès aux éléments de fixation peut se faire toujours du même côté et évite donc au monteur d'effectuer certaines opérations à l'aveugle.

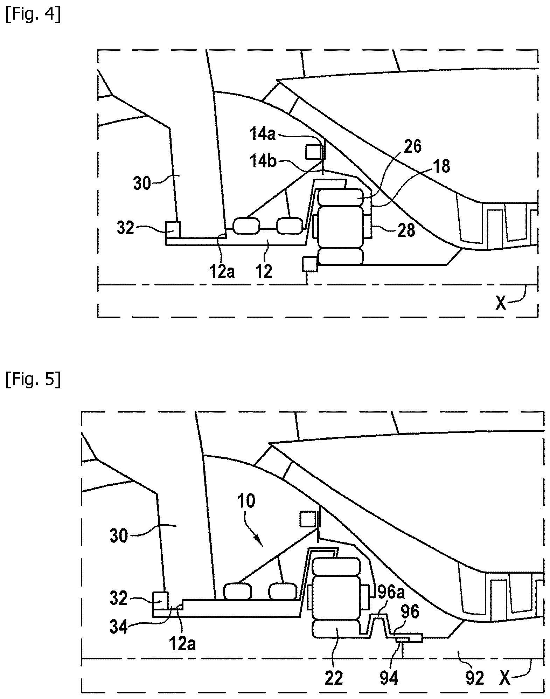

Les figures 4 et 5 illustrent des variantes de la zone Z de la figure 3. Sur ces figures, les éléments correspondant ou identiques à ceux du premier mode de réalisation recevront le même signe de référence et ne seront pas décrits à nouveau.

La variante de la figure 4 diffère du mode de réalisation précédemment décrit en ce que le réducteur 20 est un réducteur planétaire et non un réducteur épicycloïdal : en effet, c'est le porte-satellite 28 qui est fixe (ici fixé au carter 40), tandis que la couronne 26 est mobile, et plus particulièrement cinématiquement couplée à l'arbre 12.

Toutefois, cela ne modifie pas l'assemblage du module 10 au reste de la turbomachine 100, étant donné que le module 10 se comporte comme un ensemble d'un seul tenant, et que la localisation des fixations avec le reste de la turbomachine 100 n'est, dans cette variante, pas modifiée.

Les autres éléments décrits précédemment restent valables mutatis mutandis, en échangeant si besoin la couronne 26 et le porte-satellite 28.

Par ailleurs, comme il ressort de la figure 4, l'élément d'attache 18 doit contourner la couronne 26 pour se fixer au porte-satellite 28. De ce fait, l'élément d'attache 18 s'étend d'un côté du réducteur 20, à savoir le côté arrière (à droite sur la figure 4) à un autre côté du réducteur 20, à savoir le côté avant (à gauche sur la figure 4). Bien que ceci soit précisé dans le cadre de la variante de la figure 4, une telle caractéristique pourrait aussi être mise en œuvre dans le mode de réalisation de la figure 2, en reliant l'élément d'attache 18 à la couronne 26 non pas radialement à l'extérieur de la couronne 26 comme cela est illustré sur la figure 2, mais à l'arrière de la couronne 26, du côté opposé à la bride 14b du support de palier 14.

Indépendamment de ce qui précède, la figure 4 illustre que l'arbre 12 présente une butée 12a pour le positionnement axial du rotor correspondant, à savoir le propulseur 30. La butée 12a est située telle que le rotor (le propulseur 30) soit maintenu à distance des paliers 16, afin de ne pas entraver leur fonctionnement. Par ailleurs, le propulseur 30 est convenablement maintenu entre la butée 12a et l'élément de fixation 32 qui sont situés de part et d'autre du propulseur 30 dans la direction axiale X.

En l'espèce, la butée 12a est formée par un épaulement de l'arbre 12 configuré pour coopérer avec la forme du propulseur 30.

La variante de la figure 5 diffère de celle de la figure 4 en ce que les composants du module 10 comprennent en outre un deuxième arbre 96 cinématiquement couplé au réducteur 20. En l'occurrence, le deuxième arbre 96 est cinématiquement couplé au solaire 22, et configuré pour être assemblé à l'arbre de turbine BP 92. Par ailleurs, comme il ressort de la figure 5, le deuxième arbre 96 est prévu d'un côté du réducteur 20 opposé au côté de l'arbre 12.

Le fait de prévoir un deuxième arbre 96 comme intermédiaire entre le deuxième rotor, ici la turbine BP 90, et le réducteur 20, offre une flexibilité de conception accrue. Par exemple, cela permet de prévoir une souplesse 96a, c'est-à-dire une portion en serpentin capable d'accommoder des efforts, ici axiaux. De plus, cela permet un déport de l'élément de fixation 94 qui ne se trouve plus au niveau du réducteur 20, mais au niveau du deuxième arbre 96. Il s'ensuit une meilleure compacité du réducteur 20.

Le deuxième arbre 96 peut être monobloc avec le solaire 22, par exemple formé en une seule pièce, voire venu de matière.

A priori, il n'est pas nécessaire de prévoir de palier dédié pour soutenir le deuxième arbre 96, dans la mesure où sa rotation est déjà soutenue par les paliers qui soutiennent l'arbre de turbine BP 92 dont le deuxième arbre 96 est solidaire en rotation. Toutefois, de tels paliers sont envisageables.

Le cas échéant, les deuxièmes éléments de fixation 94 peuvent être situés à une extrémité axiale du deuxième arbre 96 opposée au réducteur 20 pour serrer axialement vers l'aval le deuxième arbre 96 contre le deuxième rotor, à savoir l'arbre de turbine BP 92.

Par ailleurs, la figure 5 illustre un maintien axial du propulseur 30 sur l'arbre 12 légèrement différent de celui de la figure 4 : au lieu de prévoir que l'élément de fixation 32 et la butée 12a encadrent le propulseur 30 dans son ensemble, le propulseur 30 est prévu avec un appendice 34 configuré pour être enserré entre la butée 12a et l'élément de fixation 32. Par exemple, l'appendice forme un épaulement complémentaire de l'épaulement qui forme la butée 12a.

Dans la variante de la figure 5, le propulseur 30 est moins comprimé, tandis que la variante de la figure 4 apporte une plus grande flexibilité sur le serrage du propulseur 30.

Bien que la présente description se réfère à des exemples de réalisation spécifiques, des modifications peuvent être apportées à ces exemples sans sortir de la portée générale de l'invention telle que définie par les revendications.

Par conséquent, la description et les dessins doivent être considérés dans un sens illustratif plutôt que restrictif.

## Revendications

1. Procédé de pré-assemblage pour une turbomachine d'aéronef (100), comprenant un assemblage préalable, hors de la turbomachine, des composants suivants les uns avec les autres :
- un réducteur (20) configuré pour transmettre une rotation entre au moins deux rotors de la turbomachine tout en modifiant le rapport de vitesse et de couple de l'un à l'autre desdits au moins deux rotors, le réducteur (20) comprenant un organe statorique (26, 28),
- un arbre (12) cinématiquement couplé au réducteur (20) et configuré pour être cinématiquement couplé à l'un desdits au moins deux rotors,
- un support de palier (14),
- au moins un palier (16) monté sur le support de palier (14) et configuré pour soutenir l'arbre (12) en rotation, et
- un élément d'attache (18) s'étendant de l'organe statorique (26, 28) au support de palier (14) de façon à fixer l'organe statorique au support de palier (14), **caractérisé en ce que** l'élément d'attache (18) s'étend d'un côté du réducteur (20) à un autre côté du réducteur.

2. Procédé selon la revendication 1, comprenant le frettage de l'au moins un palier (16) sur l'arbre (12) et/ou sur le support de palier (14).

3. Procédé selon la revendication 1 ou 2, dans lequel le support de palier (14) comprend un élément d'assemblage (14a) à un carter (40) de la turbomachine.

4. Procédé selon l'une quelconque des revendications 1 à 3, dans lequel les composants comprennent en outre un deuxième arbre (96) cinématiquement couplé au réducteur (20), optionnellement dans lequel le deuxième arbre (96) et l'arbre (12) sont prévus de part et d'autre du réducteur (20).

5. Procédé selon l'une quelconque des revendications 1 à 4, dans lequel l'arbre (12) présente une butée (12a) pour le positionnement axial du rotor (30) correspondant, la butée (12a) étant située telle que le rotor soit maintenu à distance de l'au moins un palier (16).

6. Procédé selon l'une quelconque des revendications 1 à 5, dans lequel l'au moins un palier (16) est choisi parmi un palier à billes, un palier à rouleaux ou un palier à rouleaux coniques.

7. Procédé selon l'une quelconque des revendications 1 à 6, dans lequel le rotor (30) cinématiquement couplé à l'arbre (12) est une soufflante ou une hélice de la turbomachine.

8. Procédé selon l'une quelconque des revendications 1 à 7, dans lequel au moins certains des composants présentent des éléments de fixation (32, 46, 94) à des pièces de la turbomachine distinctes desdits composants, les éléments de fixation étant tous prévus d'un même côté du module (10).

9. Procédé d'assemblage d'une turbomachine d'aéronef, comprenant l'obtention d'une première partie (100A) de turbomachine comprenant un rotor (90), le montage d'un module (10) obtenu par le procédé de l'une quelconque des revendications 1 à 8 sur la première partie (100A), et l'assemblage d'une deuxième partie (100B) comprenant un rotor (30) à l'arbre (12) du module (10).

10. Module (10) pour turbomachine d'aéronef réalisé par le procédé de pré-assemblage selon l'une quelconque des revendications 1 à 8, comprenant les composants suivants assemblés les uns avec les autres :
- un réducteur (20) configuré pour transmettre une rotation entre au moins deux rotors de la turbomachine tout en modifiant le rapport de vitesse et de couple de l'un à l'autre desdits au moins deux rotors, le réducteur (20) comprenant un organe statorique (26, 28),
- un arbre (12) cinématiquement couplé au réducteur (20) et configuré pour être cinématiquement couplé à l'un desdits au moins deux rotors,
- un support de palier (14),
- au moins un palier (16) monté sur le support de palier (14) et configuré pour soutenir l'arbre (12) en rotation, et
- un élément d'attache (18) s'étendant de l'organe statorique (26, 28) au support de palier (14) de façon à fixer l'organe statorique au support de palier (14), **caractérisé en ce que** l'élément d'attache (18) s'étend d'un côté du réducteur (20) à un autre côté du réducteur.

11. Module (10) pour turbomachine d'aéronef selon la revendication 10, le module comprenant en outre des premiers éléments de fixation (32) configurés pour fixer l'arbre (12) à un premier desdits rotors, les premiers éléments de fixation (32) étant optionnellement prévus à une extrémité de l'arbre (12) opposée au réducteur (20), des deuxièmes éléments de fixation (94) configurés pour fixer le réducteur (20) au deuxième desdits rotors, et des troisièmes éléments de fixation (46) configurés pour fixer le support de palier (14) à un carter de la turbomachine.

## Patentansprüche

1. Vormontageverfahren für eine Flugzeugturbomaschine (100), umfassend eine Vormontage, außerhalb der Turbomaschine, der folgenden Komponenten untereinander:
- eines Getriebes (20), das konfiguriert ist, um eine Rotation zwischen mindestens zwei Rotoren der Turbomaschine zu übertragen und gleichzeitig das Drehzahl- und Drehmomentverhältnis des einen zum andern der mindestens zwei Rotoren zu modifizieren, wobei das Getriebe (20) ein Statororgan (26, 28) umfasst,
- einer Welle (12), die kinematisch mit dem Getriebe (20) gekoppelt und konfiguriert ist, um kinematisch mit einem der mindestens zwei Rotoren gekoppelt zu sein,
- eines Lagerträgers (14),
- mindestens eines Lagers (16), das auf dem Lagerträger (14) montiert und konfiguriert ist, um die Welle (12) in Rotation zu halten, und
- eines Elements zur Befestigung (18), das sich vom Statororgan (26, 28) zum Lagerträger (14) erstreckt, um das Statororgan an den Lagerträger (14) zu fixieren, **dadurch gekennzeichnet, dass** sich das Element zur Befestigung (18) von einer Seite des Getriebes (20) auf eine andere Seite des Getriebes erstreckt.

2. Verfahren nach Anspruch 1, umfassend das Aufschrumpfen des mindestens einen Lagers (16) auf die Welle (12) und/oder auf den Lagerhalter (14).

3. Verfahren nach Anspruch 1 oder 2, wobei der Lagerhalter (14) ein Element zur Montage (14a) an ein Gehäuse (40) der Turbomaschine umfasst.

4. Verfahren nach einem der Ansprüche 1 bis 3, wobei die Komponenten außerdem eine zweite Welle (96) umfassen, die kinematisch mit dem Getriebe (20) gekoppelt ist, optional wobei die zweite Welle (96) und die Welle (12) auf beiden Seiten des Getriebes (20) vorgesehen sind.

5. Verfahren nach einem der Ansprüche 1 bis 4, wobei die Welle (12) einen Anschlag (12a) für die axiale Positionierung des entsprechenden Rotors (30) darstellt, wobei der Anschlag (12a) derart angeordnet ist, dass der Rotor von mindestens einem Lager (16) in Abstand gehalten wird.

6. Verfahren nach einem der Ansprüche 1 bis 5, wobei das mindestens eine Lager (16) ausgewählt ist aus einem Kugellager, einem Rollenlager oder einem Kegelrollenlager.

7. Verfahren nach einem der Ansprüche 1 bis 6, wobei der kinematisch mit der Welle (12) gekoppelte Rotor (30) ein Gebläse oder ein Propeller der Turbomaschine ist.

8. Verfahren nach einem der Ansprüche 1 bis 7, wobei mindestens einige der Komponenten Elemente zur Fixierung (32, 46, 94) an Teile der Turbomaschine darstellen, die verschieden von den Komponenten sind, wobei alle Elemente zur Fixierung auf einer gleichen Seite des Moduls (10) vorgesehen sind.

9. Verfahren zur Montage einer Flugzeugturbomaschine, umfassend das Erhalten eines ersten Teils (100A) der Turbomaschine, umfassend einen Rotor (90), die Montage eines Moduls (10), das durch das Verfahren eines der Ansprüche 1 bis 8 erhalten wurde, auf den ersten Teil (100A), und die Montage eines zweiten Teils (100B), umfassend einen Rotor (30), an die Welle (12) des Moduls (10).

10. Modul (10) für eine Flugzeugturbomaschine, hergestellt durch das Vormontageverfahren nach einem der Ansprüche 1 bis 8, umfassend die folgenden Komponenten, die untereinander montiert sind:
- ein Getriebe (20), das konfiguriert ist, um eine Rotation zwischen mindestens zwei Rotoren der Turbomaschine zu übertragen und gleichzeitig das Drehzahl- und Drehmomentverhältnis des einen zum andern der mindestens zwei Rotoren zu modifizieren, wobei das Getriebe (20) ein Statororgan (26, 28) umfasst,
- eine Welle (12), die kinematisch mit dem Getriebe (20) gekoppelt und konfiguriert ist, um kinematisch mit einem der mindestens zwei Rotoren gekoppelt zu sein,
- einen Lagerträger (14),
- mindestens ein Lager (16), das auf dem Lagerträger (14) montiert und konfiguriert ist, um die Welle (12) in Rotation zu halten, und
- ein Element zur Befestigung (18), das sich vom Statororgan (26, 28) zum Lagerträger (14) erstreckt, um das Statororgan an den Lagerträger (14) zu fixieren, **dadurch gekennzeichnet, dass** sich das Element zur Befestigung (18) von einer Seite des Getriebes (20) auf eine andere Seite des Getriebes erstreckt.

11. Modul (10) für eine Flugzeugturbomaschine nach Anspruch 10, wobei das Modul außerdem erste Elemente zur Fixierung (32) umfasst, die konfiguriert sind, um die Welle (12) an einen ersten der Rotoren zu fixieren, wobei die ersten Elemente zur Fixierung (32) optional an einem Ende der Welle (12) vorgesehen sind, das dem Getriebe (20) gegenüberliegt, zweite Elemente zur Fixierung (94), die konfiguriert sind, um das Getriebe (20) an den zweiten der Rotoren zu fixieren, und dritte Elemente zur Fixierung (46), die konfiguriert sind, um den Lagerträger (14) an ein Gehäuse der Turbomaschine zu fixieren.

## Claims

1. A pre-assembly method for an aircraft turbomachine (100), comprising preliminarily assembling, outside the turbomachine, the following components with each other:
- a reduction gear (20) configured to transmit a rotation between at least two rotors of the aircraft turbomachine while modifying the speed and torque ratio from one to the other one of said at least two rotors, the reduction gear comprising a stator member (26, 28),
- a shaft (12) kinematically coupled to the reduction gear (20) and configured to be kinematically coupled to one of said at least two rotors,
- a bearing support (14),
- at least one bearing (16) mounted on the bearing support (14) and configured to rotatably support the shaft (12), and
- an attachment element (18) extending from the stator member (26, 28) to the bearing support so as to fix the stator member to the bearing support (14), **characterized in that** the attachment element (18) extends from one side of the reduction gear (20) to another side of the reduction gear.

2. The method according to claim 1, comprising shrink-fitting the at least one bearing (16) on the shaft (12) and/or on the bearing support (14).

3. The method according to claim 1 or 2, wherein the bearing support (14) comprises an element (14a) for assembly with a casing (40) of the aircraft turbomachine.

4. The method according to any one of claims 1 to 3, wherein the components further comprise a second shaft (96) kinematically coupled to the reduction gear (20), optionally wherein the second shaft (96) and the shaft (12) are provided on either side of the reduction gear (20).

5. The method according to any one of claims 1 to 4, wherein the shaft (12) has an abutment (12a) for the axial positioning of the corresponding rotor (30), the abutment (12a) being located such that the rotor is kept away from the at least one bearing (16).

6. The method according to any one of claims 1 to 5, wherein the at least one bearing (16) is chosen among a ball bearing, a roller bearing or a tapered roller bearing.

7. The method according to any one of claims 1 to 6, wherein the rotor (30) kinematically coupled to the shaft (12) is a fan or a propeller of the aircraft turbomachine.

8. The method according to any one of claims 1 to 7, wherein at least some of the components have elements (32, 46, 94) for fixing to parts of the aircraft turbomachine distinct from said components, the fixing elements all being provided on the same side of the module.

9. A method for assembling an aircraft turbomachine, comprising obtaining a first turbomachine portion (100A) comprising a rotor (90), mounting a module (10) obtained by the method of any one of claims 1 to 8 on the first portion (100A), and assembling a second portion (100B) comprising a rotor (30) with the shaft (12) of the module (10).

10. A module (10) for an aircraft turbomachine, made by the pre-assembly method according to any one of claims 1 to 8, comprising the following components assembled with each other:
- a reduction gear (20) configured to transmit a rotation between at least two rotors of the aircraft turbomachine while modifying the speed and torque ratio from one to the other one of said at least two rotors, the reduction gear (20) comprising a stator member (26, 28),
- a shaft (12) kinematically coupled to the reduction gear (20) and configured to be kinematically coupled to one of said at least two rotors,
- a bearing support (14),
- at least one bearing (16) mounted on the bearing support (14) and configured to rotatably support the shaft (12), and
- an attachment element (18) extending from the stator element (26, 28) to the bearing support (14) so as to fix the stator member to the bearing support (14), **characterized in that** the attachment element (18) extends from one side of the reduction gear (20) to another side of the reduction gear.

11. The module (10) for an aircraft turbomachine according to claim 10, the module further comprising first fixing elements (32) configured to fix the shaft (12) to a first one of said rotors, the first fixing elements (32) being optionally provided at one end of the shaft (12) opposed to the reduction gear (20), second fixing elements (94) configured to fix the reduction gear (20) to the second one of said rotors, and third fixing elements (46) configured to fix the bearing support (14) to a casing of the aircraft turbomachine.
